Europäisches Patentamt

European Patent Office

Office européen des brevets

(11) Numéro de publication: **0 131 497**
**B1**

# FASCICULE DE BREVET EUROPÉEN

(12)

(45) Date de publication du fascicule du brevet:
24.02.88

(21) Numéro de dépôt: **84401279.9**

(22) Date de dépôt: **20.06.84**

(51) Int. Cl.⁴: **F 16 D 55/224,** F 16 D 55/26,
F 16 D 3/84, F 16 D 65/12

(54) **Perfectionnements aux freins multidisques.**

(30) Priorité: **30.06.83 FR 8310919**

(43) Date de publication de la demande:
**16.01.85 Bulletin 85/3**

(45) Mention de la délivrance du brevet:
**24.02.88 Bulletin 88/8**

(84) Etats contractants désignés:
**DE GB IT NL SE**

(56) Documents cité:
**FR-A-2 350 510**
**GB-A-1 087 988**
**GB-A-1 201 438**
**US-A-3 008 547**

(73) Titulaire: **BENDIX France, 126, rue de Stalingrad,
F-93700 Drancy (FR)**

(72) Inventeur: **Meynier, Guy, 58 rue de Reims, F-93600
Aulnay Sous Bois (FR)**
Inventeur: **Mery, Jean- Claude, 61 rue Emile Zola,
F-93320 Pavillons sous Bois (FR)**

(74) Mandataire: **Poidatz, Emmanuel, Division
Technique Service Brevets Bendix Europe 126,
rue de Stalingrad, F-93700 Drancy (FR)**

## Description

L'invention se rapporte à un frein multidisque, comprenant un premier disque rotatif solidaire d'un moyeu et um second disque rotatif monté sur le moyeu avec possibilité de coulissement parallèlement à la direction de l'axe de celui-ci, les axis du moyeu et desdits disques étant confondus, ainsi qu'un ensemble de patins de friction comportant des garnitures de friction susceptibles d'être appliquées sur les faces des disques par un dispositif d'actionnement tel qu'un vérin hydraulique à étrier, tandis que le second disque est porté par un manchon cannelé intérieurement qui peut coulisser sur une partie du moyeu cannelée extérieursment, l'engrènement mutuel de ces cannelures assurant l'entraînement en rotation du second disque par le moyeu, et que le manchon coulissant est relié au moyeu, de part et d'autre de la zone de fixation du second disque, par des membranes d'étanchéité déformables de forme générale cylindrique.

Un tel frein à disque est décrit dans le document US-A-3 008 547.

Ces membranes d'étanchéité ont pour but d'empêcher la pénétration de salissures dans la région des cannelures du moyeu et du manchon coulissant, risquant de causer le blocage de ce dernier. Lorsqu'elles sont réalisées sous la forme de soufflets cylindriques recouvrant le manchon jusqu'à la zone de fixation du second disque sur celui-ci, elles se trouvent exposées à la chaleur que dégagent au cours des cycles de freinage les disques et les garnitures associées. La température de ces éléments étant susceptible de s'élever jusqu'à 800 ou 900°C, on conçoit que cette disposition puisse entraîner une réduction de la durée de vie, ou même la destruction, des soufflets d'étanchéité réalisés généralement en caoutchouc.

Afin d'écarter cet inconvénient, il est proposé selon l'invention de disposer lesdites membranes d'étanchéité au moins partiellement à l'intérieur de surfaces métalliques annulaires solidaires du moyeu (3) et entourant coaxialememt des zones de la partie (3a) de celui-ci sur laquelle coulisse le manchon (5), et sont pour leur partie restante entourées par des bagues (40, 41) portées coaxialement par le moyeu (3) et/ou par le manchon (5), l'ensemble desdites surfaces annulaires et desdites bagues jouant le rôle d'écran thermique et protégeant les membranes d'étanchéité de la chaleur dégagée dans les disques et les patins de friction lors de l'actionnement du frein.

La mise en oeuvre de la disposition décrite est facilitée lorsque les membranes d'étanchéité sont attachées au manchon non pas au pied des éléments de fixation du second disque au manchon, mais respectivement aux extrémités du manchon.

Dans une forme d'exécution préférée, les membranes d'étanchéité sont des gaines souples retroussés sur elles-mêmes, qui suivent les déplacements du manchon par rapport au moyeu en se déroulant plus ou moins. Ces gaines peuvent être attachées respectiviment au moyeu et au manchon par des bourrelets marginaux qu'elles comportent, qui sont retenus prisonniers sur le moyeu ou sur le manchon par des bagues de fixation.

Le document GB-A-1 201 438 décrit un joint télescopique pour arbre de transmission dans lesquels des membranes d'étanchéité déformables sont disposées sur l'arbre à l'intérieur de surfaces métalliques annulaires de protection.

D'autres caractéristiques et avantages de l'invention ressortiront plus clairement de la description qui va suivre, en regard des dessins annexés, d'un exemple de réalisation non limitatif.

La figure 1 représente, en coupe axiale, un frein à disques agencé conformément à l'invention.

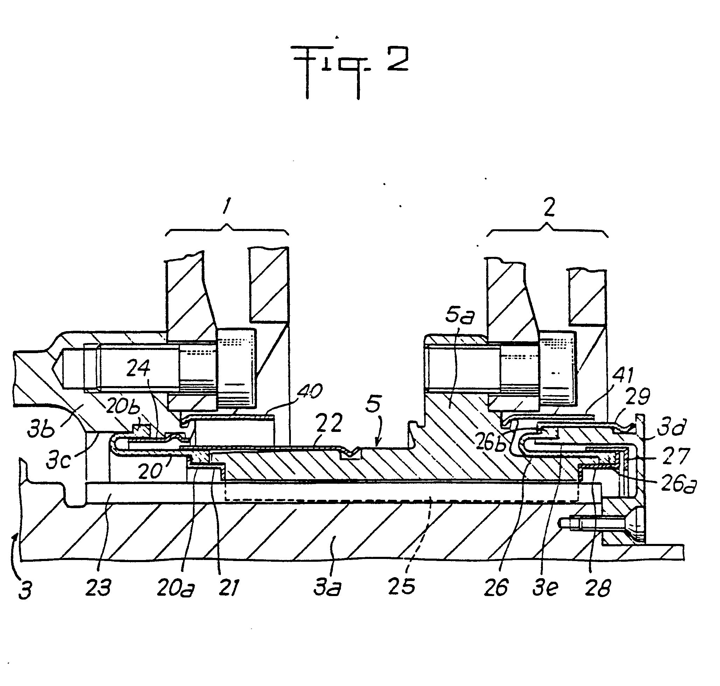

La figure 2 représente à plus grande échelle la partie centrale de l'objet de la figure 1.

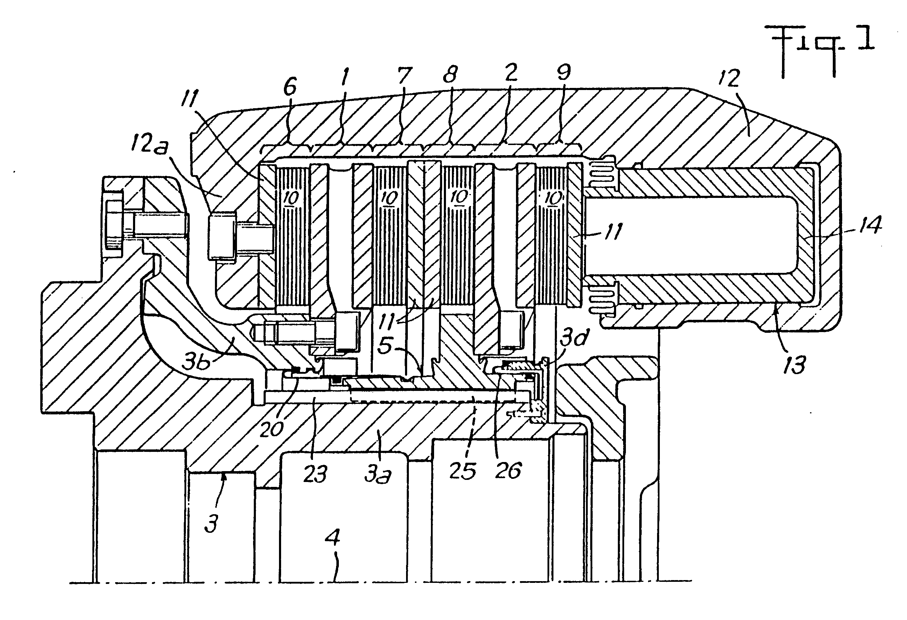

Le frein multidisque représenté sur la figure 1 comporte un premier disque rotatif 1 dit extérieur et un second disque rotatif 2 dit intérieur, tous deux montés sur un moyeu métallique 3 dont l'axe 4 coïncide avec ceux des disques 1 et 2. Tandis que le disque 1 est solidaire du moyeu 3, donc fixe dans la direction de l'axe 4, le disque 2 peut se déplacer suivant cette direction, étant fixé à un manchon 5 cannelé intérieurement qui peut coulisser sur une partie cylindrique cannelée 3a du moyeu 3 autour de laquelle il est engagé, son entraînement en rotation par le moyeu étant assuré par l'engrènement de ses cannelures 25 avec les cannelures 23 du moyeu 3.

Chaque disque de frein 1 ou 2 coopère avec une paire de patins de friction 6 et 7 ou 8 et 9 disposés de part et d'autre du disque de frein 1 ou 2 correspondant et susceptibles d'être appliqués contre les faces latérales de celui-ci. Chacun de ces patins de friction 6, 7, 8, 9 comprend une garniture de friction 10 et une plaque porte-garniture 11, chaque garniture 10 coopérant avec la face adjacente du disque 1 ou 2 correspondant.

Un étrier 12 est disposé par-dessus les disques de frein 1, 2 et leurs patins de friction 6, 7, 8, 9 de façon à coiffer l'ensemble disques-patins. Dans la partie de l'étrier 12 située du côté du disque intérieur 2 est prévu un moteur de commande tel qu'un vérin hydraulique 13 dont le piston 14 est susceptible d'agir sur la plaque porte-garniture 11 du patin intérieur 9 et, par réaction et grâce à son nez échancré 12a, sur la plaque porte-garniture 11 du patin extérieur 6, de manière à commander le serrage de l'ensemble disques-patins suivant la direction de l'axe 4 et à faire ainsi naître une friction de freinage entre chaque garniture 10 et la face de disque conjuduée. Cette action s'accompagne d'un déplacement du disque intérieur 2 parallèlement à l'axe 4 par coulissement du manchon 5 sur la partie 3a du moyeu 3, dont les cannelures doivent être protégées des salissures qui pourraient les encrasser.

A cet effet, l'extrémité de gauche (selon la représentation des figures) du manchon 5 est reliée de façon étanche à la partie adjacente 3b du moyeu 3, à laquelle est fixé le disque extérieur 1, par une gaine ou "chaussette" souple 20 retroussée sur elle-même. Cette gaine est attachée, par l'un de ses bords doté d'un bourrelet circulaire 20a, sur tout le pourtour de l'extrémité du manchon 5, au moyen de bagues en tôle 21 et 22 enclenchées sur le manchon 5 et retenant prisonnier entre elles ledit bourrelet 20a. L'autre bord de la gaine est attaché, par son bourrelet 20b analogue au bourrelet 20a, sur tout le pourtour de la partie 3b du moyeu 3 qui sert de support au disque 1. Cette partie présente une surface annulaire 3c entourant partiellement la gaine 20 et située en regard et à distance de l'extrémité correspondante des cannelures 23 de la partie 3a, et c'est dans une rainure circulaire que comporte cette surface annulaire qu'est retenu prisonnier par une bague de tôle 24 le second bourrelet 20b de la gaine 20.

A l'autre extrémité du manchon coulissant 5 est prévue de même une gaine 26 retroussée sur elle-même, reliant de manière étanche cette extrémité sur tout son pourtour à une partie adjacente du moyeu 3, constituée par un anneau 3d entourant ladite extrémité du manchon 5 avec réserve d'un intervalle annulaire où prend place une portion de la gaine 26, à l'intérieur de la surface 3e de l'anneau 3d. La gaine 26 est attachée au manchon 5 par un bourrelet 26a retenu prisonnier entre des bagues de tôle 27 et 28 enclenchées sur le manchon, et au moyeu 3 par un bourrelet 26b retenu prisonnier dans une rainure circulaire de la partie 3d par une bague de tôle 28 enclenchée sur ladite partie.

La gaine d'étanchéité 20 est à l'abri du rayonnement thermique que peuvent émettre les disques 1, 2 et les garnitures de freinage 10 par sa disposition à l'intérieur de la partie 3b du moyeu 3 et par l'effet d'écran complémentaire que procure une bague de tôle 40 entourant la bague 12 à l'aplomb du disoue 1 et fixée à la partie 3b avec réserve d'un intervalle libre par rapport à la bague 22.

La gaine d'étanchéité 26 est également à l'abri du rayonnement thermique émanant des disques et garnitures de freinage par sa disposition à l'intérieur de la surface 3e de la partie 3d du moyeu 3 et par l'effet d'écran complémentaire fourni par une bague de tôle 41 entourant la bague 29 à l'aplomb du disque 2 et fixée à la partie 5a du manchon 5 qui supporte le disque 2, avec réserve d'un intervalle libre par rapport à la bague 29.

En raison de la structure du frein multidisque choisi à titre d'exemple pour cette description, la menbrane 20 située du côté extérieur est disposée dans le prolongement du manchon 5, tandis que la membrane 26 située du côté intérieur s'étend sur l'extrémité correspondante du manchon 5 qu'elle recouvre. Bien entendu, suivant les cas rencontrés en pratiques, chacune des deux membranes d'étanchéité utilisées peut présenter la disposition de la membrane 20 ou celle de la membrane 26 du présent exemple.

**Revendications**

1. Frein multidisque, comprenant un premier disque rotatif solidaire (1) d'un moyeu (3) et un second disque rotatif (2) monté sur le moyeu (3) avec possibilité de coulissement parallèlement à la direction de l'axe (4) de celui-ci, les axes du moyeu (3) et desdits disques (1, 2) étant confondus, ainsi qu'un ensemble de patins de friction (6 à 9) comportant des garnitures de friction susceptibles d'être appliquées sur les faces des disques par un dispositif d'actionnement tel qu'un vérin hydraulique (13) à étrier (12), tandis que le second disque (2) est porté par un manchon (5) cannelé intérieurement qui peut coulisser sur une partie (3a) du moyeu (3) cannelée extérieurement, l'engrènement mutuel de ces cannelures (23, 25) assurant l'entraînement en rotation du second disque (2) par le moyeu (3), et que le manchon (5) coulissant est relié au moyeu (3), de part et d'autre de la zone de fixation du second disque (2), par des membranes d'étanchéité déformables (20, 26) de forme générale cylindrique, ce frein étant caractérisé par le fait que les membranes (20, 26) sont disposées partiellement à l'intérieur de surfaces métalliques annulaires (3c, 3e) solidaires du moyeu (3) et entourant coaxialement des zones de la partie (3a) de celui-ci sur laquelle coulisse le manchon (5), et sont pour leur partie restante entourées par des bagues (40, 41) portées coaxialement par le moyeu (3) et/ou par le manchon (5), l'ensemble desdites surfaces annulaires (3c, 3e) et desdites bagues (40, 41) jouant le rôle d'écran thermique et protégeant les membranes d'étanchéité de la chaleur dégagée dans les disques et les patins de friction lors de l'actionnement du frein.

2. Frein selon la revendication 1, caractérisé par le fait que les membranes d'étanchéité (20, 26) sont attachées au manchon coulissant (5) aux extrémités de celui-ci.

3. Frein selon l'une des revendications 1 ou 2, caractérisé par le fait que les membranes d'étanchéité sont des gaines souples (20, 26) retroussées sur elles-mêmes.

4. Frein selon la revendication 3, caractérisé par le fait que les gaines (20, 26) sont attachées respectivement au moyeu (3) et au manchon (5) par des bourrelets marginaux (20a, 20b, 26a, 26b) qu'elles comportent, qui sont retenus prisonniers sur le moyeu ou sur le manchon par des bagues de fixation (21, 22, 24, 27, 28, 29).

## Patentansprüche

1. Mehrscheibenbremse mit einer ersten Bremsscheibe (1), die mit einer Nabe (3) fest verbunden ist, und einer zweiten Bremsscheibe (2), die auf der Nabe (3) parallel zur Richtung der Achse (4) derselben gleitbar gelagert ist, wobei die Achsen der Nabe (3) und der Bremsscheiben (1, 2) zusammenfallen, sowie mit einer Anordnung aus Bremsbacken (6 bis 9) mit Reibbelägen, die gegen die Flächen der Bremsscheiben durch eine Betätigungsvorrichtung wie einen hydraulischen Bremssattel (12) - Motor (13) andrückbar sind, wobei die zweite Bremsscheibe (2) von einer innen genuteten Hülse (5) getragen wird, die auf einem außen genuteten Abschnitt (3a) der Nabe (3) gleiten kann, wobei der gegenseitige Eingriff dieser Nuten (23, 25) den Drehantrieb der zweiten Bremsscheibe (2) durch die Nabe (3) sicherstellt, und die gleitbare Hülse (5) mit der Nabe (3) beidseitig zu dem Befestigungsbereich der zweiten Bremsscheibe (2) durch verformbare Dichtungsmanschetten (20, 26) von ungefähr zylindrischer Form verbunden ist, dadurch gekennzeichnet, daß die Manschetten (20, 26) teilweise im Inneren metallischer Ringflächen (3c, 3e) angeordnet sind, die mit der Nabe (3) fest verbunden sind und koaxial Bereiche des Abschnittes (3a) derselben umgeben, auf der die Hülse (5) gleitet, und an ihrem verbleibenden Abschnitt von Ringen (40, 41) umgeben sind, die koaxial von der Nabe (3) und/oder der Hülse (5) getragen werden, wobei die Anordnung dieser Ringflächen (3c, 3e) und der Ringe (40, 41) die Rolle einer thermischen Abschirmung spielen und die Dichtungsmanschetten gegen die Wärme schützen, die in den Bremsscheiben und den Bremsbacken bei einer Bremsbetätigung entsteht.

2. Bremse nach Anspruch 1, dadurch gekennzeichnet, daß die Dichtungsmanschetten (20, 26) an der gleitbaren Hülse (5) an deren Enden befestigt sind.

3. Bremse nach Anspruch 1 oder 2, dadurch gekennzeichnet, daß die Dichtungsmanschetten biegsame Hüllen (20, 26) sind, die auf sich selbst zurückgebogen sind.

4. Bremse nach Anspruch 3, dadurch gekennzeichnet, daß die Hüllen (20, 26) an der Nabe (3) bzw. an der Hülse (5) durch an ihnen vorgesehene Randwulste (20a, 20b, 26a, 26b) befestigt sind, die an der Nabe oder an der Hülse durch Befestigungsringe (21, 22, 24, 27, 28, 29) festgehalten sind.

## Claims

1. Multi-disc brake comprising a first rotary disc solid (1) with the hub (3) and a second rotary disc (2) mounted on the hub (3) with a possibility of sliding parallel to the direction of the axis (4) of the latter, the axes of the hub (3) and of the said discs (1, 2) coinciding with one another, and as well as an assembly of friction pads (6 to 9) incorporating friction linings capable of being applied against the faces of the discs by means of an actuating device, such as a hydraulic jack (13) with a caliper (12), whilst the second disc (2) is carried by an internally splined sleeve (5) which can slide on an externally splined part (3a) of the hub (3), the mutual engagement of these splines (23, 25) ensuring that the second disc (2) is driven in rotation by the hub (3), the sliding sleeve (5) being connected to the hub (3), on either side of the fastening region of the second disc (2), by means of deformable diaphragm seals (20, 26) general cylindrical shape, this brake being characterized in that these diaphragms (20, 26) are arranged partially within annular metal surfaces (3c, 3e) which are solid with the hub (3) and surrounding coaxially zones of the part (3a) of the latter on which the sleeve (5) slides, their remaining part being surrounded by rings (40, 41) carried coaxially by the hub (3) and/or the sleeve (5), all of the said annular surfaces (3c, 3e) and of the said rings (40, 41) functioning as a thermal screen and protecting the diaphragm seals from the heat released in the discs and the friction pads during the actuation of the brake.

2. Brake according to Claim 1, characterized in that the diaphragm seals (20, 26) are attached to the sliding sleeve (5) at the ends of the latter.

3. Brake according to either of Claims 1 and 2, characterized in that the diaphragm seals are flexible sheaths (20, 26) turned in on themselves.

4. Brake according to Claim 3, characterized in that the sheaths (20, 26) are attached to the hub (3) and to the sleeve (5) respectively by means of edge beads (20a, 20b, 26a, 26b) which they possess and which are retained on the hub or on the sleeve by fastening rings (21, 22, 24, 27, 28, 29).

Fig. 1

0 131 497

# Fig. 2